# EUROPEAN PATENT SPECIFICATION

(11) **EP 4 176 340 B1**
(45) Date of publication and mention of the grant of the patent: **25.06.2025**
(21) Application number: 20948061.5
(22) Date of filing: 07.08.2020
(51) Int. Cl.: G06F 3/01, G06F 3/041

(54) **TACTILE ARRANGEMENT FOR DISPLAY DEVICE**
TAKTILE ANORDNUNG FÜR ANZEIGEVORRICHTUNG
AGENCEMENT TACTILE POUR DISPOSITIF D'AFFICHAGE

(43) Date of publication of application: 10.05.2023
(73) Proprietor: Huawei Technologies Co., Ltd., Shenzhen, Guangdong 518129 (CN)
(72) Inventor: EVREINOV, Grigori, 33100 Tampere (FI); COE, Patrick, 33100 Tampere (FI); RAISAMO, Roope, 33100 Tampere (FI)
(74) Representative: Grünecker Patent- und Rechtsanwälte PartG mbB
(86) International application number: PCT/CN2020/107885
(87) International publication number: WO 2022/027616

(56) References cited:
- WO-A1-2009/002605
- US-A1- 2011 279 382
- US-A1- 2011 285 637
- US-A1- 2019 391 653
- US-B1- 10 706 693
- CAGATAY BASDOGAN ET AL: "A Review of Surface Haptics:Enabling Tactile Effects on Touch Surfaces", ARXIV.ORG, CORNELL UNIVERSITY LIBRARY, 201 OLIN LIBRARY CORNELL UNIVERSITY ITHACA, NY 14853, 28 April 2020 (2020-04-28), XP081654591, DOI: 10.1109/TOH.2020.2990712

## Description

### TECHNICAL FIELD

The disclosure relates to a tactile arrangement for a display device, the arrangement comprising a haptic signal generating element and an actuator.

### BACKGROUND

As computer miniaturization progresses, an increasing number of features are expected to be incorporated into ever smaller packages. Mobile electronic consumer products, such as smartphones and wearable devices, smart garments, and their accessories, may generally include vibrators for generating tactile feedback such as conventional (warnings) and conditional cues (directional, numerical, rhythmic and so on). For example, smartphones and wrist wearable devices (such as smart watches and trackers) have embedded vibrators for generating tactile feedback signals while being in contact with the user.

In order to achieve high fidelity imaging in two-dimensional and three-dimensional haptic space, including in smartphones, a number of methods and techniques have been proposed. For example, there are ongoing attempts to identify materials and/or methods of producing materials that are capable of enhancing tactile perception locally in response to specific signals and parameters in the area of contact. However, enhancing tactile sensitivity will often lead to a lowering of the signal-to-noise ratio. Noise can mask both the perception of weak stimuli and the perception of strong stimuli.

Furthermore, known experimental haptic techniques, based on a close-loop control, for high-fidelity signal localization involve significant difficulties and limitations in their practical implementations in small electronic devices.

Also, known high-fidelity tactile imaging is not yet accurate enough to meet user demands. The technical problems include signal dissipation and distortion when vibrations are transmitted to the hand through a rigid non-planar multilayered medium, inappropriate interference, and overlapping with ambient noise. Other factors are related to human perception that can affect fingertip sensation, signal detection, and distinguishability.

For example, there has been proposed a tactile display device in which vibration is applied to the fingernail side, not to the pad side of the user's finger, such that a virtual undulating sensation can be superimposed onto the real-world sensations obtained during a scanning action of the finger. The device is based on the phenomenon that when a vibration is applied while the finger is scanning an object, a perception of undulation rather than of vibration is produced. This method of induced tactile stimulation is able to modify the pressure produced on the pad side of the finger but requires active scanning operation to perceive the dynamics of the modified original parameters specified by the local finger pressure on the real surface. The method also requires an additional gadget attached to the fingernail.

Furthermore, there has been experiments with sensorimotor enhancers using piezoelectric actuators for generating white-noise vibrations which are transmitted to tactile receptors around the finger pulp of the user. Low-pass filtered white-noise vibrations have a cutoff frequency of 300 Hz. However, the construction features of the actuator attachment as well as ambient vibrations impairs the transmissibility to the fingertip and the spectrum of stochastic resonance signals.

US 2011/0285637 A1 relates to an apparatus for a user interface of an electronic device, the apparatus comprising a textured surface having a predetermined roughness, the textured surface configured to produce a first predefined vibration in the skin of a user of the apparatus on physical interaction with the skin of the user, wherein the roughness of the textured surface is configured such that the first predefined vibration produced by the physical interaction has a frequency and/or amplitude which is detectable by a specific mechanical receptor in the skin of the user. In addition to the textured surface, the apparatus may comprise a capacitive element to generate a second predefined vibration in the skin of the user independently of the textured surface. The document "A Review of Surface Haptics: Enabling Tactile Effects on Touch Surfaces" by Cagatay Basdogan et al. describes technologies enabling tactile feedback on touch surfaces. US 2019/0391653 A1 discloses a tactile sense presentation apparatus that includes a movable body, an actuator unit, and a signal generation unit. The actuator unit is connected to the movable body. The signal generation unit is configured to supply a driving signal to the actuator unit, the driving signal generating a vibration on the actuator unit.

### SUMMARY

It is an object to provide an improved tactile arrangement for a display device. The foregoing and other objects are achieved by the features of the independent claims. Further implementation forms are apparent from the dependent claims, the description, and the figures.

According to a first aspect, there is provided a tactile arrangement for a display device according to claim 1, the arrangement comprising a structure extending in a main plane and comprising a haptic signal generating element and a modulating signal generating element superimposed onto the haptic feedback element, at least one first actuator configured to displace the structure along an actuation axis perpendicular to the main plane by generating at least a first transverse wave, the first transverse wave propagating, from the first actuator, along a main propagation axis in the main plane, and at least one second actuator configured to displace the structure in an actuation plane perpendicular to the main propagation axis by generating a tangential wave, the tangential wave propagating, from the second actuator, in auxiliary propagation directions extending tangentially to the first transverse wave. The tangential wave is superimposed onto the first transverse wave such that the tangential wave modulates at least one of a frequency and amplitude of the first transverse wave.

By superimposing a tangential wave onto the transverse wave, the tactile perception of the user is enhanced. The local perception of constructive wave interference vibration signals can be enhanced by superimposed modulating signals. This helps to achieve high fidelity imaging in two-dimensional and three-dimensional haptic space without requiring unnecessarily constrictive demands to signals, propagation media, and available haptic actuator technology. By separating the actuation from the tactile stimulation, using the haptic signal generating element and modulating signal generating element as propagation medium for vibration signals, i.e. transverse and tangential waves, to the point of user skin contact, and using the constructive interference of the signals, high-definition multi-point haptic feedback is achieved while minimizing the number of actuators, allowing extra free space and reduced energy consumption, increased signal control, and increased haptic signal transfer efficiency.

The structure is layered such that the haptic signal generating element and the modulating signal generating element are arranged in parallel, abutting layers, allowing the haptic signal generating element and the modulating signal generating element to be integrated and the modulating signal generating element to be supported and carried by the haptic signal generating element.

In a further possible implementation form of the first aspect, the modulating signal generating element has increased surface friction compared to the haptic signal generating element. This allows further enhancement of the user's tactile perception of the superimposed waves. Such tactile stimulation is achieved by modulating the surface friction, i.e. enhancing the tactile contrast (the tactile signal-to-noise ratio) at a specific point.

In a further possible implementation form of the first aspect, the modulating signal generating element has a textured surface, eliminating the need for active or transformable components.

In a further possible implementation form of the first aspect, the propagation of the first transverse wave comprises movement, in steps along the main propagation axis, of a local interference maximum of the first transverse wave. The local interference maximum focuses the user's attention to that specific area of skin contact, and the relative trajectory of the local interference maximum, i.e. normal micro displacements, moving across the contact area can be distinguished more accurately by the user, due to the presence of superimposed tangential waves making the surrounding material, i.e. the modulating signal generating element of an electronic device or an accessory covering, stimulate the skin.

In a further possible implementation form of the first aspect, the modulating signal generating element comprises a polymeric material or print, facilitating a durable and thin modulating signal generating element.

In a further possible implementation form of the first aspect, the modulating signal generating element comprises a grid pattern, a step of the grid pattern complying with a displacement frequency generated by the second actuator. By providing such predetermined steps in the grid pattern which complies with the actual displacement frequency, the impact of tactile enhancement is maximized.

In a further possible implementation form of the first aspect, displacement is generated at frequencies which allow efficient vibrations to be generated based on human sensitivity.

In a further possible implementation form of the first aspect, the first actuator is a one-dimensional actuator, preferably one of an electromagnetic actuator and a piezoelectric actuator. Since the actuator has a range of movement which is limited to along one axis, the actuator is not only spatially efficient but also reliable.

In a further possible implementation form of the first aspect, the second actuator is a two-dimensional actuator, facilitating displacement in at least one plane and, hence, generating tangential waves.

In a further possible implementation form of the first aspect, the second actuator is arranged at least partially adjacent the haptic signal generating element, allowing the actuation of the second actuator to be directly transmitted to the haptic signal generating element.

According to a second aspect, there is provided a display device comprising a tactile arrangement according to the above, wherein at least one external surface of the display device comprises the structure of the arrangement, and the modulating signal generating element of the structure is configured to be in tactile contact with a user of the display device. Such an arrangement allows the tactile perception of the user to be enhanced significantly due to the arrangement being at least partially in direct contact with the user.

In a possible implementation form of the second aspect, the display device is a tactile display device.

In a further possible implementation form of the second aspect, the external surface is comprised in a side portion and/or a back portion of a housing or cover of the display device, such that the electronic display of the display device is not affected by vibrations.

In a further possible implementation form of the second aspect, the second actuator of the arrangement comprises a functional component of the display device, such as a battery. By using other already existing components for the actuation process, there is no need for separate actuators taking up space and requiring the device to be configured to accommodate all such components including their possible movements.

In a further possible implementation form of the second aspect, the arrangement comprises a plurality of first actuators, the plurality of first actuators being configured to displace the structure along the actuation axis by generating at least one transverse wave propagating along the main propagation axis in the main plane of the structure. By using a plurality of actuators, transverse waves can be generated across different areas of the device, depending on which actuator is actuated.

In a further possible implementation form of the second aspect, the plurality of first actuators are arranged in pairs and share main propagation axis, one actuator of the pair of first actuators generating a first transverse wave propagating in a first main propagation direction along the main propagation axis, the other actuator of the pair of first actuators generating a second transverse wave propagating in a second main propagation direction along the main propagation axis, such that the first transverse wave and the second transverse wave interfere constructively along the main propagation axis. This allows the transverse waves generated by pair of actuators to interfere constructively in order to provide a stronger vibration signal.

In a further possible implementation form of the second aspect, each first actuator of the plurality of first actuators is configured to actuate with a predetermined delay with regards to actuation of the other first actuators of the plurality of first actuators, the delay being configured to create constructive wave interference between the first transverse wave and the second transverse wave.

In a further possible implementation form of the second aspect, the display device comprises two pairs of first actuators, arranged such that each first actuator is arranged adjacent a corner of the display device, the first actuators of each pair being arranged at opposite corners such that the main propagation axis of one pair intersects the main propagation axis of the other pair.

In a further possible implementation form of the second aspect, the first actuator is fixed to a stationary element of the display device, such as an internal chassis. This allows the actuator to be securely fixed and displacement to be limited to the components of the tactile arrangement.

In a further possible implementation form of the second aspect, the display device is one of a VR haptic headset, a wearable, a smartphone, a tablet, or a laptop.

In a further possible implementation form of the second aspect, the tactile arrangement is arranged in a casing for an electronic device, a haptic garment, or steering wheel covering.

This and other aspects will be apparent from the embodiments described below.

### BRIEF DESCRIPTION OF THE DRAWINGS

In the following detailed portion of the present disclosure, the aspects, embodiments and implementations will be explained in more detail with reference to the example embodiments shown in the drawings, in which:
Fig. 1 shows a schematic top view of a display device in accordance with one embodiment of the present invention;
Fig. 2 shows a schematic cross-sectional side view of a display device in accordance with one embodiment of the present invention,
Figs. 3a and 3b show a schematic top view and a cross-sectional side view of a display device in accordance with one embodiment of the present invention;
Figs. 4a to 4f show schematic top views and cross-sectional side views of tactile arrangements in accordance with embodiments of the present invention.

### DETAILED DESCRIPTION

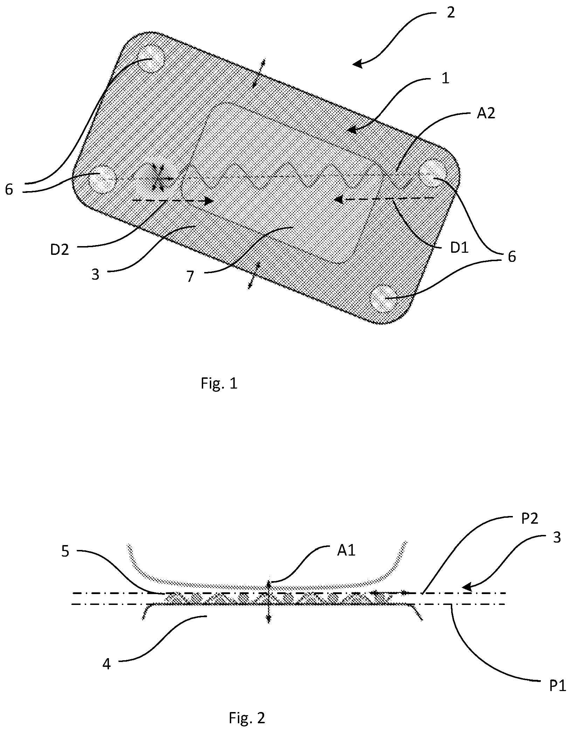

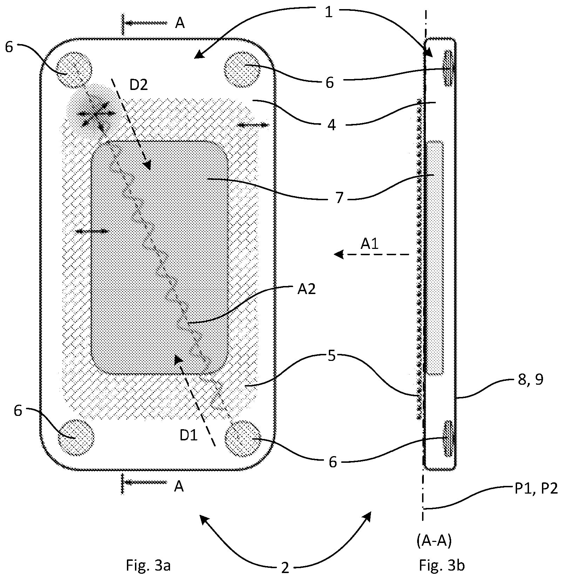

Figs. 1 and 3a-3b show a display device 2 comprising a tactile arrangement 1, described in more detail below. At least one external surface of the display device 2 comprises a structure 3 of the arrangement 1, and one part of the structure, i.e. a modulating signal generating element 5, is configured to be in tactile contact with the user of the display device 2, as indicated in Fig. 2. The external surface is preferably comprised in a side portion and/or a back portion of the housing or cover 8 of the display device 2.

The display device is a tactile display device 2, such as a VR haptic headset, a wearable, a smartphone, a tablet, or a laptop. Furthermore, the tactile arrangement 1 may be arranged not in a display device but in a casing for any electronic device, a haptic garment, or steering wheel covering.

The tactile arrangement 1 comprises a structure 3 extending in a main plane P1, and comprises a haptic signal generating element 4 and a modulating signal generating element 5 superimposed onto the haptic signal generating element 4. The structure may, in other words, be layered such that the modulating signal generating element 5 is arranged in a layer on top of the haptic signal generating element 4. The haptic signal generating element 4 may be the above-mentioned housing or cover 8 of the display device 2, and the modulating signal generating element 5 may be part of the external surface of the housing or cover 8.

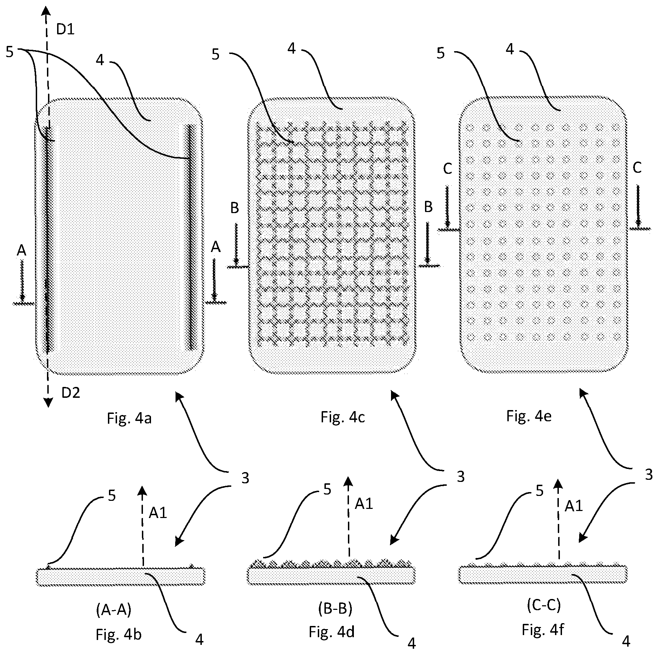

The modulating signal generating element 5 may have an increased surface friction compared to the haptic signal generating element 4. The modulating signal generating element 5 may comprise a polymeric material or print. Furthermore, the modulating signal generating element 5 may have a textured surface, as shown in Figs. 4a to 4f.

The arrangement 1 further comprises at least one first actuator 6 configured to displace the structure 3 along an actuation axis A1 perpendicular to the main plane P1, as shown in Fig. 2, by generating a haptic signal in the form of at least a first transverse wave, shown in Figs. 1 and 3a. The first transverse wave propagates from the first actuator 6 along a main propagation axis A2 in the main plane P1.

The first actuator 6 may be a one-dimensional actuator, generating movements only along the actuation axis A1 as indicated by the arrow in Fig. 2. The first actuator 6 may comprise a piezoelectric actuator or an electromagnetic actuator comprising electromechanical polymer-metal composite or alloy material, magnetorestricitive material, electroactive material, photoactive material, temperature active material, and/or magnetoactive material (not shown).

Furthermore, the first actuator 6 may be fixed to a stationary element of the display device 2, such as an internal chassis 9, as indicated in Fig. 3b.

At least one second actuator 7 is provided and configured to displace the structure 3 in an actuation plane P2 which extends perpendicular to the main propagation axis A2, as shown in Figs. 2 and 3b. The second actuator 7 generates a modulating signal in the form of a tangential wave. The tangential wave propagates, from the second actuator 7, in auxiliary propagation directions extending tangentially to the first transverse wave, as indicated by intersecting arrows in Figs. 1 and 3a.

The second actuator 7 may be a two-dimensional actuator, generating movements in actuation plane P2 as indicated by the two parallel arrows in Fig. 1 or 3a. The second actuator 7 may be arranged at least partially adjacent the haptic signal generating element 4. The second actuator 7 may be enclosed within at least a part of the haptic signal generating element 4, as shown in Fig. 3b. Furthermore, the second actuator 7 may be arranged at some distance from the haptic signal generating element 4, additional components being arranged between the second actuator 7 and the haptic signal generating element 4 such that the additional components transfer the vibrations from the second actuator 7 such that the tangential wave can still be generated by these vibrations. The second actuator 7 may comprise a functional component of the display device 2, such as a battery.

The above-mentioned battery, i.e. energy storage, may be adapted for supplying electric charge to drive the first actuator 6 and/or the second actuator 7.

The second actuator 7 may be multifunctional having a plurality of functional actuation modes. The second actuator 7, in such case, functions as a both energy storage and seismic mass. A first functional actuation mode may comprise generating mechanical vibrations, also referred to as haptic signal generating mode.

A second functional actuation mode may comprise generating electric charge by means of mechanical vibrations of the second actuator 7, the vibrations generating electric charge which is stored in the battery, also referred to as energy harvesting mode.

The vibrations may be generated at frequencies below 30Hz, preferably below 20 Hz.

The third functional actuation mode may comprise generating electric charge by means of a magnetic energy transmitter(not shown), the electric charge being stored in the battery, also referred to as wireless charging mode.

The tangential wave is superimposed onto the first transverse wave such that the tangential wave modulates at least one of a frequency and amplitude of the first transverse wave, which enhances the tactile perception of the user. The propagation of the first transverse wave may comprise movement in steps, along the main propagation axis A2, of a local interference maximum of the first transverse wave. An instantaneous local interference maximum is indicated in Figs. 1 and 3a by a circular marking on the main propagation axis A2.

The modulating signal generating element 5 may comprise linear areas extending along opposite edges of the display device 2, as shown in Figs. 4a and 4b. Such a reduced modulating signal generating element 5 is able to positively impact and enhance perception of the local interference maximum, but in limited propagation directions D1, D2.

The modulating signal generating element 5 may comprise grid patterns, as shown in Figs 4c to 4f. Figs. 4c-4d illustrate a redundant grid pattern which can cause extra noise for users having high sensitivity to vibrations. Figs. 4e-4f illustrate an optimized grid pattern which positively impacts and enhances perception of the local interference maximum moving across the actuation plane P2 in any direction.

The step of the grid pattern, i.e. the distance between nodes of the grid, preferably complies with the displacement frequency generated by the second actuator 7, in order to produce maximum impact. Or oppositely, the displacement frequency generated by the second actuator 7 can be customized to comply with the step of the grid pattern.

As shown in Figs. 1 and 3a to 3b, the arrangement 1 may comprise a plurality of first actuators 6. The plurality of first actuators 6 is configured to displace the structure 3 along the actuation axis A1, shown in Fig. 2, by generating at least one transverse wave propagating along the main propagation axis A2 in the main plane P1, shown in Figs. 1 and 3a.

The plurality of first actuators 6 may be arranged in pairs and share main propagation axis A2. Figs 1 and 3a. show a first pair of first actuators 6 and their main propagation axis A2, as well as a second pair of first actuators 6. The two pairs of first actuators 6may be arranged such that each first actuator 6 is arranged adjacent a corner of the display device 2, with the first actuators 6 of each pair being arranged at opposite corners. In other words, the main propagation axis A2 of one pair of first actuators 6 extends diagonally and/or intersects the main propagation axis A2 of the other pair of first actuators 6.

One actuator of the pair of first actuators 6 may generate a first transverse wave propagating in a first main propagation direction D 1 along the main propagation axis A2, while the other actuator of the pair of first actuators 6 may generate a second transverse wave propagating in a second main propagation direction D2 along the main propagation axis A2, as shown in Fig. 3a. This allows the first transverse wave and the second transverse wave to interfere constructively along the main propagation axis A2.

Furthermore, each first actuator of the plurality of first actuators 6 may be configured to actuate with a predetermined delay with regards to the time and/or phase of actuation of the other first actuators of the plurality of first actuators 6. The delay is configured to create constructive wave interference between the first transverse wave and the second transverse wave.

The display device 2 may further comprise a processor, control circuitry, and a flexible battery cable extending from the second actuator/battery 7. The flexible battery cable allows the second actuator 7 to be actuated while maintaining energy supply to other components.

The various aspects and implementations have been described in conjunction with various embodiments herein. However, other variations to the disclosed embodiments can be understood and effected by those skilled in the art in practicing the claimed subject-matter, from a study of the drawings, the disclosure, and the appended claims. In the claims, the word "comprising" does not exclude other elements or steps, and the indefinite article "a" or "an" does not exclude a plurality. A single processor or other unit may fulfill the functions of several items recited in the claims. The mere fact that certain measures are recited in mutually different dependent claims does not indicate that a combination of these measured cannot be used to advantage. A computer program may be stored/distributed on a suitable medium, such as an optical storage medium or a solid-state medium supplied together with or as part of other hardware, but may also be distributed in other forms, such as via the Internet or other wired or wireless telecommunication systems.

The reference signs used in the claims shall not be construed as limiting the scope. Unless otherwise indicated, the drawings are intended to be read (e.g., cross-hatching, arrangement of parts, proportion, degree, etc.) together with the specification, and are to be considered a portion of the entire written description of this disclosure. As used in the description, the terms "horizontal", "vertical", "left", "right", "up" and "down", as well as adjectival and adverbial derivatives thereof (e.g., "horizontally", "rightwardly", "upwardly", etc.), simply refer to the orientation of the illustrated structure as the particular drawing figure faces the reader. Similarly, the terms "inwardly" and "outwardly" generally refer to the orientation of a surface relative to its axis of elongation, or axis of rotation, as appropriate.

## Claims

1. A tactile arrangement (1) for a display device (2), said arrangement (1) comprising:
- a structure (3) extending in a main plane (P1) and comprising
-- a haptic signal generating element (4) and
-- a modulating signal generating element (5) superimposed onto said haptic signal generating element (4), the haptic signal generating element (4) and modulating signal generating element (5) being a propagation medium for vibration signals, i.e. transverse and tangential waves, and wherein the structure (3) is layered such that the haptic signal generating element (4) and the modulating signal generating element (5) are arranged in parallel, abutting layers,
- at least one first actuator (6) configured to displace said structure (3) along an actuation axis (A1) perpendicular to said main plane (P1) by generating at least a first transverse wave, said first transverse wave propagating, from said first actuator (6), along a main propagation axis (A2) in said main plane (P1),
- at least one second actuator (7) configured to displace said structure (3) in an actuation plane (P2) and perpendicular to said main propagation axis (A2) by generating a tangential wave, said tangential wave propagating, from said second actuator (7), in auxiliary propagation directions extending tangentially to said first transverse wave, wherein said actuation plane (P2) is parallel to said main plane (P1),
said tangential wave being superimposed onto said first transverse wave such that said tangential wave modulates at least one of a frequency and amplitude of said first transverse wave.

2. The arrangement (1) according to claim 1, wherein said modulating signal generating element (5) has increased surface friction compared to said haptic signal generating element (4).

3. The arrangement (1) according to claim 1 or 2, wherein said modulating signal generating element (5) comprises a polymeric material or print.

4. The arrangement (1) according to any one of the previous claims, wherein said modulating signal generating element (5) comprises a grid pattern, a step of said grid pattern complying with a displacement frequency generated by said second actuator (7).

5. The arrangement (1) according to any one of the previous claims, wherein said first actuator (6) is a one-dimensional actuator, preferably one of an electromagnetic actuator and a piezoelectric actuator.

6. The arrangement (1) according to any one of the previous claims, wherein said second actuator (7) is a two-dimensional actuator.

7. The arrangement (1) according to any one of the previous claims, wherein said second actuator (7) is arranged at least partially adjacent said haptic signal generating element (4).

8. A display device (2) comprising a tactile arrangement (1) according to any one of claims 1 to 7, wherein
at least one external surface of said display device (2) comprises the structure (3) of said arrangement (1),
the modulating signal generating element (5) of said structure (3) being configured to be in tactile contact with a user of said display device (2).

9. The display device (2) according to claim 8, wherein said external surface is comprised in a side portion and/or a back portion of a housing or cover (8) of said display device (2).

10. The display device (2) according to claim 8 or 9, wherein the second actuator (7) of said arrangement (1) comprises a functional component of said display device (2), such as a battery.

11. The display device (2) according to any one of claims 8 to 10, wherein said arrangement (1) comprises a plurality of first actuators (6), said plurality of first actuators (6) being configured to displace said structure (3) along the actuation axis (A1) by generating at least one transverse wave propagating along the main propagation axis (A2) in the main plane (P1) of said structure (3).

12. The display device (2) according to claim 11, wherein said plurality of first actuators (6) are arranged in pairs and share main propagation axis (A2),
one actuator of said pair of first actuators (6) generating a first transverse wave propagating in a first main propagation direction (D1) along said main propagation axis (A2), the other actuator of said pair of first actuators (6) generating a second transverse wave propagating in a second main propagation direction (D2) along said main propagation axis (A2),
such that said first transverse wave and said second transverse wave interfere constructively along said main propagation axis (A2).

13. The display device (2) according to claim 12, wherein each first actuator of said plurality of first actuators (6) is configured to actuate with a predetermined delay with regards to actuation of the other first actuators of said plurality of first actuators (6), said delay being configured to create constructive wave interference between said first transverse wave and said second transverse wave.

14. The display device (2) according to claim 12 or 13, comprising two pairs of first actuators (6), arranged such that each first actuator (6) is arranged adjacent a corner of said display device (2), the first actuators (6) of each pair being arranged at opposite corners such that the main propagation axis (A2) of one pair intersects the main propagation axis (A2) of the other pair.

15. The display device (2) according to any one of claims 8 to 14, wherein said first actuator (6) is fixed to a stationary element of said display device (2), such as an internal chassis (9).

## Patentansprüche

1. Taktile Anordnung (1) für eine Anzeigevorrichtung (2), wobei die Anordnung (1) umfasst:
- eine Struktur (3), die sich in einer Hauptebene (P1) erstreckt und umfasst
-- ein haptisches Signalerzeugungselement (4) und
-- ein modulierendes Signalerzeugungselement (5), das auf das haptische Signalerzeugungselement (4) aufgesetzt ist, wobei das haptische Signalerzeugungselement (4) und das modulierende Signalerzeugungselement (5) ein Ausbreitungsmedium für Vibrationssignale, d. h. Quer- und Tangentialwellen, sind, und wobei die Struktur (3) derart geschichtet ist, dass das haptische Signalerzeugungselement (4) und das modulierende Signalerzeugungselement (5) in parallelen, anliegenden Schichten angeordnet sind,
- mindestens ein erstes Betätigungselement (6), das konfiguriert ist, um die Struktur (3) entlang einer Betätigungsachse (A1) senkrecht zu der Hauptebene (P1) zu verschieben, durch ein Erzeugen mindestens einer ersten Querwelle, wobei sich die erste Querwelle von dem ersten Betätigungselement (6) entlang einer Hauptausbreitungsachse (A2) in der Hauptebene (P1) ausbreitet,
- mindestens ein zweites Betätigungselement (7), das konfiguriert ist, um die Struktur (3) in einer Betätigungsebene (P2) und senkrecht zu der Hauptausbreitungsachse (A2) zu verschieben, durch das Erzeugen einer Tangentialwelle, wobei sich die Tangentialwelle von dem zweiten Betätigungselement (7) in Hilfsausbreitungsrichtungen, die sich tangential zu der ersten Querwelle erstrecken, ausbreitet, wobei die Betätigungsebene (P2) parallel zu der Hauptebene (P1) ist, wobei die Tangentialwelle auf die erste Querwelle derart aufgesetzt ist, dass die Tangentialwelle mindestens eines von einer Frequenz und einer Amplitude der ersten Querwelle moduliert.

2. Anordnung (1) nach Anspruch 1, wobei das modulierende Signalerzeugungselement (5) verglichen mit dem haptischen Signalerzeugungselement (4) eine erhöhte Oberflächenreibung aufweist.

3. Anordnung (1) nach Anspruch 1 oder 2, wobei das modulierende Signalerzeugungselement (5) ein/einen Polymermaterial oder -aufdruck umfasst.

4. Anordnung (1) nach einem der vorstehenden Ansprüche, wobei das modulierende Signalerzeugungselement (5) ein Gittermuster umfasst, wobei eine Stufe des Gittermusters mit einer Verschiebungsfrequenz, die durch das zweite Betätigungselement (7) erzeugt wird, übereinstimmt.

5. Anordnung (1) nach einem der vorstehenden Ansprüche, wobei das erste Betätigungselement (6) ein eindimensionales Betätigungselement, vorzugsweise eines von einem elektromagnetischen Betätigungselement oder einem piezoelektrischen Betätigungselement, ist.

6. Anordnung (1) nach einem der vorstehenden Ansprüche, wobei das zweite Betätigungselement (7) ein zweidimensionales Betätigungselement ist.

7. Anordnung (1) nach einem der vorstehenden Ansprüche, wobei das zweite Betätigungselement (7) mindestens teilweise angrenzend an das haptische Signalerzeugungselement (4) angeordnet ist.

8. Anzeigevorrichtung (2), die eine taktile Anordnung (1) nach einem der Ansprüche 1 bis 7 umfasst, wobei
mindestens eine externe Oberfläche der Anzeigevorrichtung (2) die Struktur (3) der Anordnung (1) umfasst,
das modulierende Signalerzeugungselement (5) der Struktur (3) konfiguriert ist, um in taktilem Kontakt mit einem Benutzer der Anzeigevorrichtung (2) zu stehen.

9. Anzeigevorrichtung (2) nach Anspruch 8, wobei die externe Oberfläche in einem Seitenabschnitt und/oder einem Rückabschnitt eines Gehäuses oder einer Abdeckung (8) der Anzeigevorrichtung (2) enthalten ist.

10. Anzeigevorrichtung (2) nach Anspruch 8 oder 9, wobei das zweite Betätigungselement (7) der Anordnung (1) eine funktionale Komponente der Anzeigevorrichtung (2), wie eine Batterie, umfasst.

11. Anzeigevorrichtung (2) nach einem der Ansprüche 8 bis 10, wobei die Anordnung (1) eine Vielzahl von ersten Betätigungselementen (6) umfasst, wobei die Vielzahl von ersten Betätigungselementen (6) konfiguriert ist, um die Struktur (3) entlang der Betätigungsachse (A1) zu verschieben, durch das Erzeugen von mindestens einer Querwelle, die sich entlang der Hauptausbreitungsachse (A2) in der Hauptebene (P1) der Struktur (3) ausbreitet.

12. Anzeigevorrichtung (2) nach Anspruch 11, wobei die Vielzahl von ersten Betätigungselementen (6) paarweise angeordnet sind und eine Hauptausbreitungsachse (A2) teilen,
wobei ein Betätigungselement des Paars von ersten Betätigungselementen (6) eine erste Querwelle, die sich in einer ersten Hauptausbreitungsrichtung (D1) entlang der Hauptausbreitungsachse (A2) ausbreitet, erzeugt, wobei das andere Betätigungselement des Paars von ersten Betätigungselementen (6) eine zweite Querwelle, die sich in einer zweiten Hauptausbreitungsrichtung (D2) entlang der Hauptausbreitungsachse (A2) ausbreitet, erzeugt,
derart, dass sich die erste Querwelle und die zweite Querwelle entlang der Hauptausbreitungsachse (A2) konstruktiv überlagern.

13. Anzeigevorrichtung (2) nach Anspruch 12, wobei jedes erste Betätigungselement der Vielzahl von ersten Betätigungselementen (6) konfiguriert ist, um mit einer zuvor bestimmten Verzögerung in Bezug auf eine Betätigung der anderen ersten Betätigungselemente der Vielzahl von ersten Betätigungselementen (6) betätigt zu werden, wobei die Verzögerung konfiguriert ist, um eine konstruktive Welleninterferenz zwischen der ersten Querwelle und der zweiten Querwelle herzustellen.

14. Anzeigevorrichtung (2) nach Anspruch 12 oder 13, die zwei Paare von ersten Betätigungselementen (6), die derart angeordnet sind, dass jedes erste Betätigungselement (6) angrenzend an eine Ecke der Anzeigevorrichtung (2) angeordnet ist, umfasst, wobei die ersten Betätigungselemente (6) jedes Paars derart an gegenüberliegenden Ecken angeordnet sind, dass die Hauptausbreitungsachse (A2) eines Paars die Hauptausbreitungsachse (A2) des anderen Paars schneidet.

15. Anzeigevorrichtung (2) nach einem der Ansprüche 8 bis 14, wobei das erste Betätigungselement (6) an einem stationären Element der Anzeigevorrichtung (2), wie einem internen Chassis (9), befestigt ist.

## Revendications

1. Agencement tactile (1) pour un dispositif d'affichage (2), ledit agencement (1) comprenant :
- une structure (3) s'étendant dans un plan principal (P1) et comprenant
-- un élément générateur de signaux haptiques (4) et
-- un élément générateur de signaux de modulation (5) superposé audit élément générateur de signaux haptiques (4), l'élément générateur de signaux haptiques (4) et l'élément générateur de signaux de modulation (5) étant un moyen de propagation de signaux de vibration, c'est-à-dire, des ondes transversales et tangentielles, et dans lequel la structure (3) est stratifiée de telle sorte que l'élément générateur de signaux haptiques (4) et l'élément générateur de signaux de modulation (5) sont agencés en couches parallèles et contiguës,
- au moins un premier actionneur (6) conçu pour déplacer ladite structure (3) le long d'un axe d'actionnement (A1) perpendiculaire audit plan principal (P1) en générant au moins une première onde transversale, ladite première onde transversale se propageant, à partir dudit premier actionneur (6), le long d'un axe de propagation principal (A2) dans ledit plan principal (P1),
- au moins un second actionneur (7) conçu pour déplacer ladite structure (3) dans un plan d'actionnement (P2) et perpendiculaire audit axe de propagation principal (A2) en générant une onde tangentielle, ladite onde tangentielle se propageant, à partir dudit second actionneur (7), dans des directions de propagation auxiliaires s'étendant de manière tangentielle à ladite première onde transversale, dans lequel ledit plan d'actionnement (P2) est parallèle audit plan principal (P1),
ladite onde tangentielle étant superposée à ladite première onde transversale de telle sorte que ladite onde tangentielle module au moins l'une parmi une fréquence et une amplitude de ladite première onde transversale.

2. Agencement (1) selon la revendication 1, dans lequel ledit élément générateur de signaux de modulation (5) a une friction de surface accrue par rapport audit élément générateur de signaux haptiques (4).

3. Agencement (1) selon la revendication 1 ou 2, dans lequel ledit élément générateur de signaux de modulation (5) comprend un matériau polymère ou une impression.

4. Agencement (1) selon l'une quelconque des revendications précédentes, dans lequel ledit élément générateur de signaux de modulation (5) comprend un quadrillage, un niveau dudit quadrillage étant conforme à une fréquence de déplacement générée par ledit second actionneur (7).

5. Agencement (1) selon l'une quelconque des revendications précédentes, dans lequel ledit premier actionneur (6) est un actionneur unidimensionnel, de préférence l'un parmi un actionneur électromagnétique et un actionneur piézoélectrique.

6. Agencement (1) selon l'une quelconque des revendications précédentes, dans lequel ledit second actionneur (7) est un actionneur bidimensionnel.

7. Agencement (1) selon l'une quelconque des revendications précédentes, dans lequel ledit second actionneur (7) est agencé au moins partiellement adjacent à l'élément générateur de signaux haptiques (4).

8. Dispositif d'affichage (2) comprenant un agencement tactile (1) selon l'une quelconque des revendications 1 à 7, dans lequel
au moins une surface externe dudit dispositif d'affichage (2) comprend la structure (3) dudit agencement (1),
l'élément générateur de signaux de modulation (5) de ladite structure (3) étant configuré pour être en contact tactile avec un utilisateur dudit dispositif d'affichage (2).

9. Dispositif d'affichage (2) selon la revendication 8, dans lequel ladite surface externe est comprise dans une partie latérale et/ou une partie arrière d'un boîtier ou d'un couvercle (8) dudit dispositif d'affichage (2).

10. Dispositif d'affichage (2) selon la revendication 8 ou 9, dans lequel le second actionneur (7) dudit agencement (1) comprend un composant fonctionnel dudit dispositif d'affichage (2), tel qu'une batterie.

11. Dispositif d'affichage (2) selon l'une quelconque des revendications 8 à 10, dans lequel ledit agencement (1) comprend une pluralité de premiers actionneurs (6), ladite pluralité de premiers actionneurs (6) étant conçue pour déplacer ladite structure (3) le long de l'axe d'actionnement (A1) en générant au moins une onde transversale se propageant le long de l'axe de propagation principal (A2) dans le plan principal (P1) de ladite structure (3).

12. Dispositif d'affichage (2) selon la revendication 11, dans lequel ladite pluralité de premiers actionneurs (6) sont agencés par paires et partagent un axe de propagation principal (A2),
un actionneur de ladite paire de premiers actionneurs (6) générant une première onde transversale se propageant dans une première direction de propagation principale (D1) le long dudit axe de propagation principal (A2), l'autre actionneur de ladite paire de premiers actionneurs (6) générant une seconde onde transversale se propageant dans une seconde direction de propagation principale (D2) le long dudit axe de propagation principal (A2),
de telle sorte que ladite première onde transversale et ladite seconde onde transversale interfèrent de manière constructive le long dudit axe de propagation principal (A2).

13. Dispositif d'affichage (2) selon la revendication 12, dans lequel chaque premier actionneur de ladite pluralité de premiers actionneurs (6) est conçu pour agir avec un retard prédéterminé par rapport à un actionnement des autres premiers actionneurs de ladite pluralité de premiers actionneurs (6), ledit retard étant configuré pour créer une interférence d'onde constructive entre ladite première onde transversale et ladite seconde onde transversale.

14. Dispositif d'affichage (2) selon la revendication 12 ou 13, comprenant deux paires de premiers actionneurs (6), agencés de telle sorte que chaque premier actionneur (6) est adjacent à un coin dudit dispositif d'affichage (2), les premiers actionneurs (6) de chaque paire étant agencés au niveau de coins opposés de telle sorte que l'axe de propagation principal (A2) d'une paire coupe l'axe de propagation principal (A2) de l'autre paire.

15. Dispositif d'affichage (2) selon l'une quelconque des revendications 8 à 14, dans lequel ledit premier actionneur (6) est fixé à un élément stationnaire dudit dispositif d'affichage (2), tel qu'un châssis interne (9).
